# EUROPÄISCHE PATENTSCHRIFT

(11) **EP 1 906 506 B1**
(45) Veröffentlichungstag und Bekanntmachung des Hinweises auf die Patenterteilung: **22.04.2009**
(21) Anmeldenummer: 06020497.1
(22) Anmeldetag: 29.09.2006
(51) Int. Cl.: H02J 7/00, H01M 10/48

(54) **Vorrichtung zum Laden von Akkumulatoren**
Device for charging accumulators
Dispositif pour charger des accumulateurs

(43) Veröffentlichungstag der Anmeldung: 02.04.2008
(73) Patentinhaber: W & H Dentalwerk Bürmoos GmbH, 5111 Bürmoos (AT)
(72) Erfinder: Schröck, Rainer, 5112 Lamprechtshausen (AT); Stürzer, Christian, 5113 St. Georgen (AT)

(56) Entgegenhaltungen:
- WO-A-99/38238
- US-A1- 4 940 966
- US-A1- 5 111 128
- US-A1- 5 912 544
- US-A1- 5 963 014
- US-B1- 6 236 186

## Beschreibung

Die vorliegende Erfindung betrifft Vorrichtungen zum Laden eines Akkumulators gemäß den Oberbegriff des Anspruchs 1 und einen Akkumulator nach dem Oberbegriff des Anspruchs 7.

Schnurlose, medizinische Handgriffe oder Handstücke mit einer internen Energiequelle in Form von Batterien oder Akkumulatoren werden aufgrund ihrer einfachen Handhabbarkeit im Vergleich zu Handgriffen, die über ein Versorgungskabel mit einer externen Energiequelle verbunden sind, immer beliebter. Aufgrund der unterschiedlichen Anforderungen zum Beispiel in Bezug auf Leistung, Bauform oder Baugröße an die schnurlosen Handgriffe gibt es auch eine immer größer werdende Anzahl an Batterien oder Akkumulatortypen mit unterschiedlichen Speicherkapazitäten, Leistungsabgaben, Bauformen, Ladeanforderungen etc. Um zu vermeiden, dass für jeden Akkumulatorentyp ein eigenes Ladegerät benötigt wird, sind die Ladegeräte so ausgestaltet, dass unterschiedliche Akkumulatoren an sie angeschlossen werden können. Dies bedeutet, dass die Anschluss-oder Kontaktvorrichtung der Ladegerät so ausgebildet ist, dass Akkumulatoren mit unterschiedlichen Bauformen oder Baugrößen an die Ladegeräte anschließbar sind, und / oder dass eine Ladeschaltung vorgesehen ist, die die Ladeanforderungen an den jeweiligen angeschlossenen Akkumulator anpasst, diesen also zum Beispiel mit der benötigten Versorgungsspannung oder Stromstärke versorgt, oder die das passende Ladeverfahren auswählt.

Kann ein Ladegerät den Ladestrom oder das Ladeverfahren an den angeschlossenen Akkumulator anpassen, so ist es vor dem Start des Ladevorgangs notwendig, über eine Identifikationsvorrichtung den Akkumulatorentyp zu bestimmen und das zugehörige Ladeverfahren bzw. die passenden Ladestromparameter auszuwählen. Aus dem Stand der Technik sind hierzu verschiedene Lösungen bekannt, so zum Beispiel mechanische Schalter, unterschiedlich lang ausgebildete Kontakte an den Akkumulatoren, wie zum Beispiel in der Patentschrift US 5,187,422 offenbart, oder Widerstandsmessungen, wobei jeder Akkumulatortyp mit einem Erkennungswiderstand versehen ist. Durch Bestimmung des Widerstandwerts können die unterschiedlichen Akkumulatortyp erkannt werden. Alle diese Identifikationsvorrichtungen haben jedoch Nachteile, insbesondere kann es durch die wiederholte Benutzung zu Veränderungen an den mechanischen Bauteilen kommen, so dass zum Beispiel bei der Widerstandsmessung verfälschte Übergangswiderstände auftreten, wodurch Akkumulatortypen falsch oder nicht erkannt werden.

Aus dem Patent US 5,111,128 sind eine Vorrichtung zum Laden von Akkumulatoren mit Magnetsensoren und dazugehörige Akkumulatoren mit Magnetelementen bekannt. Zur Unterscheidung unterschiedlicher Akkumulatoren und ihrer Jeweiligen Ladeanforderungen bestimmen die Magnetsensoren die Anordnung der Magnetelemente am Akkumulator und deren Polarität.

Das Dokument WO 99/38238 A1 offenbart ein Identifikationssystem für Akkumulatoren, das in Mobiltelefonen oder Ladegeräten eingesetzt werden kann und das magneto-mechanische Schalter umfasst. Die Erkennung unterschiedlicher Akkumulatortypen erfolgt über das Vorhandensein oder das Fehlen eines oder mehrerer Schaltbetätigungselemente an den Akkumulatoren.

Das Patent US 5,912,544 beschreibt die Erkennung unterschiedlicher Akkumulatortypen durch Reed-Sensoren in einem Radiogerät auf Basis des Vorhandenseins oder des Fehlens von Magneten.

Aus dem Patent US 6,236,186 B1 ist ein Ladegerät für Akkumulatoren mit einem Etikettenlesegerät bekannt, das zum Beispiel Magnetstreifen, die sich auf dem Akkumulator befinden, ausliest. Die Magnetstreifen identifizieren den Akkumulatortyp und dessen Ladeanforderung, so dass das Ladegerät die Akkumulatoren entsprechend laden kann.

Der vorliegenden Erfindung liegt die Aufgabe zugrunde eine Vorrichtung zum Laden von Akkumulatoren medizinischer Geräte mit einer alternativen, auch nach oftmaliger Benutzung zuverlässigen, einfach herstellbaren und kostengünstigen Erkennung der Akkumulatoren sowie einen entsprechenden Akkumulator zu schaffen.

Diese Aufgabe wird gemäß der vorliegenden Erfindung durch eine Vorrichtung zum Laden von Akkumulatoren mit den Merkmalen des Anspruchs 1 und durch einen Akkumulator gemäß Anspruch 7 gelöst. Besonders vorteilhafte Ausführungsformen sind in den Unteransprüchen angeführt.

Bei den erfindungsgemäßen Vorrichtungen zum Laden von Akkumulatoren, im Weiteren auch als Ladegeräte bezeichnet, erfolgt die Erkennung der unterschiedlichen Akkumulatortypen über eine berührungslose, magnetische Identifikationsvorrichtung. Damit entfällt in vorteilhafter Weise die Notwendigkeit eines direkten Kontakts zwischen dem zu ladenden Akkumulator und der Identifikationsvorrichtung und damit die Gefahr einer verfälschten Identifikation aufgrund einer beeinträchtigten Kontaktierung. Die erfindungsgemäße Vorrichtung und der erfindungsgemäße Akkumulator sind auch äußerst schmutzunempfindlich, haben eine gute Widerstandsfähigkeit gegenüber hohen Temperaturen, die zum Beispiel bei der Sterilisation des Akkumulators nötig ist, zeichnen sich durch einen einfachen Schaltungsaufbau aus und erzeugen in Bezug auf einzuhaltende Grenzwerte bei der elektromagnetische Verträglichkeit (EMV-Vorschriften) nur eine geringe Abstrahlung.

In einem ersten Ausführungsbeispiel weist die Identifikationsvorrichtung zumindest ein Magnetelement und zumindest einen Magnetsensor zur Detektion zumindest eines magnetischen Parameters des zumindest einen Magnetelements auf, wobei der zumindest eine Magnetsensor zur Weiterleitung eines Identifikationssignals mit der Ladeschaltung verbunden ist und wobei das zumindest eine Magnetelement und der zumindest eine Magnetsensor so ausgebildet sind, dass durch eine mit einem anschließbaren Akkumulator verbundene Abschirm- und / oder Verstärkungsvorrichtung der zumindest eine magnetische Parameter des zumindest einen Magnetelements veränderbar und diese Veränderung durch den zumindest einen Magnetsensor detektierbar ist. Der Vorteil dieses zweiten Ausführungsbeispiels liegt insbesondere darin, dass der Akkumulator kein Magnetelement aufweist. Ist ein Akkumulator mit einem Magnetelement im Handgriff zum Beispiel zum Antrieb des Handgriffmotors eingefügt, so kann die Gefahr bestehen, dass das Magnetfeld des Magnetelements im Akkumulator unerwünscht Bauteile im Handgriff beeinflusst, insbesondere Magnetsensoren die im Handgriff für Steuerungszwecke enthalten sind. Durch das zweite Ausführungsbeispiel wird diese Gefahr eliminiert.

Bei beiden Ausführungsbeispielen ist die Ladeschaltung zur Erkennung der unterschiedlichen, anschließbaren Akkumulatoren auf Basis des Identifikationssignals und zur Auswahl der den unterschiedlichen Akkumulatoren zugeordneten Ladeanforderung(en) in Abhängigkeit des Identifikationssignals ausgebildet.

Ein Ladegerät gemäß dem zweiten Ausführungsbeispiel kann einen oder mehrere Magnetsensoren gleichen oder unterschiedlichen Typs aufweisen, insbesondere einen Magnetsensor, der zur Abgabe eines Identifikationssignals bei Vorhandensein eines Magnetfelds ausgebildet ist, und / oder einen Magnetsensor, der zur Abgabe eines Identifikationssignals in Abhängigkeit der detektierten magnetischen Polarität ausgebildet ist, und / oder einen Magnetsensor, der zur Abgabe eines Identifikationssignals in Abhängigkeit der detektierten Magnetfeldstärke ausgebildet ist, und / oder einen Magnetsensor, der zur Abgabe eines Identifikationssignals in Abhängigkeit der detektierten Feldrichtung ausgebildet ist. Ein Ladegerät gemäß dem zweiten Ausführungsbeispiel kann des Weiteren ein oder mehrere Magnetelemente aufweisen. Sowohl die Magnetsensoren als auch die Magnetelemente sind im Wesentlichen im Bereich der Kontaktvorrichtungen angeordnet.

Ein mit einem Ladegerät gemäß dem zweiten Ausführungsbeispiel zusammenwirkender Akkumulator muss neben zumindest einer mehrmals elektrisch aufladbaren Akkumulatorzelle und elektrischen Kontakten, die mit der zumindest einen Akkumulatorzelle verbunden und an das Ladegerät anschließbar sind, zumindest eine Abschirm- und / oder Verstärkungsvorrichtung aufweisen, durch die ein magnetischer Parameter des Magnetelements des Ladegeräts veränderbar, insbesondere verstärkbar, zum Beispiel im Sinne einer Bündelung der Magnetfeldlinien, abschwächbar oder in seiner Richtung veränderbar ist. Die Abschirm- und / oder Verstärkungsvorrichtung kann durch ein magnetisch leitfähiges Material, insbesondere durch ein Element aus Weicheisen und / oder durch ein magnetisch abschirmendes Material, das zum Beispiel das Magnetfeld derart ablenkt oder abschirmt, dass es den Magnetsensor nicht mehr erreicht, gebildet sein. Die Abschirm- und / oder Verstärkungsvorrichtung kann ein eigenständiges Bauteil sein, zum Beispiel ein Stab, eine Platte oder eine Leiste die im oder am Akkumulator angebracht ist, oder sie kann durch den Akkumulator oder einen Teil des Akkumulators gebildet sein, zum Beispiel durch sein Gehäuse. Derartige Akkumulatorteile können um eine bessere Abschirm-und / oder Verstärkungswirkung zu erreichen zusätzlich besonders ausgestaltet sein, zum Beispiel bevorzugt in einem bestimmten Abschnitt, in dem die Abschirmwirkung besonders gut sein soll, mit einer größeren Wandstärke ausgebildet sein.

In einer ersten bevorzugten Variante des zweiten Ausführungsbeispiels umfasst das Ladegerät einen Magnetsensor zur Messung der Magnetfeldstärke und ein Magnetelement, dessen Magnetfeldstärke so ausgewählt ist, dass der Magnetsensor die Feldstärke nicht detektiert, die Feldstärke also zum Beispiel unter der Detektionsgrenze des Sensors liegt. Wird ein Akkumulator mit einer auf den Magnetsensor und das Magnetelement ausgelegten Verstärkungsvorrichtung in Form eines Weicheisenelements auf das Ladegerät aufgesetzt, so richtet oder bündelt die Verstärkungsvorrichtung das Magnetfeld in Richtung des Magnetsensors, so dass dieser das Magnetfeld nachweisen und ein Identifikationssignal an die Ladesteuerung abgeben kann. Durch geeignete Auswahl der Verstärkungsvorrichtung können unterschiedliche Magnetfeldstärken erzeugt werden, so dass mehrere Akkumulatortypen durch nur einen Magnetsensor und ein Magnetelement erkennbar sind. Selbstverständlich können auch mehrere Magnetelemente und Magnetsensoren vorgesehen sein.

In einer zweiten bevorzugten Variante des zweiten Ausführungsbeispiels detektiert der Magnetsensor das Vorhandensein eines Magnetfelds des Magnetelements, solange kein Akkumulator an das Ladegerät angeschlossen ist. Der Akkumulator umfasst eine Abschirmvorrichtung, die das Magnetfeld vom Magnetsensor ablenkt oder abschirmt, so dass nach dem Anschließen des Akkumulators an das Ladegerät der Magnetsensor erkennt, dass kein Magnetfeld vorhanden ist und ein Identifikationssignal abgibt. Diese Variante ist insbesondere bei stufenförmigen Kontaktvorrichtungen von Vorteil, wobei eines der beiden Elemente Sensor oder Magnet am Boden der Stufe und das andere der beiden Elemente am gewinkelt dazu angeordneten Schenkel angeordnet ist. Dadurch kann eine besonders gute Abschirmwirkung erreicht werden. Auch bei dieser Variante können mehrere Magnetelemente und Magnetsensoren vorgesehen sein.

Unter dem Begriff unterschiedliche Ladeanforderungen wird verstanden, dass zum Wiederaufladen eines bestimmten Akkumulatortyps spezifische Einstellungen, Parameter oder Voraussetzungen auszuwählen sind, zum Beispiel, dass unterschiedliche Akkumulatoren mit unterschiedlichen Ladeverfahren geladen werden müssen oder dass sie unterschiedliche Arten von Ladeströmen, insbesondere unterschiedliche Spannungen und / oder Stromstärken benötigen.

Die Erfindung wird nachfolgend anhand bevorzugter Ausführungsbeispiele und Bezug nehmend auf die beigefügten Zeichnungen erläutert:
Figur 1 zeigt eine Aufsicht auf ein Ausführungsbeispiel einer Vorrichtung zum Laden von Akkumulatoren.
Figur 2 zeigt die Unterseite eines Ausführungsbeispiels einer Vorrichtung zum Laden von Akkumulatoren.
Figur 3 zeigt ein Ausführungsbeispiel einer kombinierte Abdeck- und Verbindungsvorrichtung für eine Vorrichtung zum Laden von Akkumulatoren.
Figur 4 zeigt eine teilweise Schnittdarstellung durch die Vorrichtung zum Laden von Akkumulatoren gemäß Figur 1.
Figur 5 zeigt eine Schnittdarstellung durch einen Akkumulator zur Verwendung mit einer Vorrichtung zum Laden von Akkumulatoren.
Figur 6 zeigt in Form eines schematischen Schaltbilds ein Ausführungsbeispiel zweier miteinander verbundene Schaltungsanordnungen zweier Vorrichtungen zum Laden von Akkumulatoren.

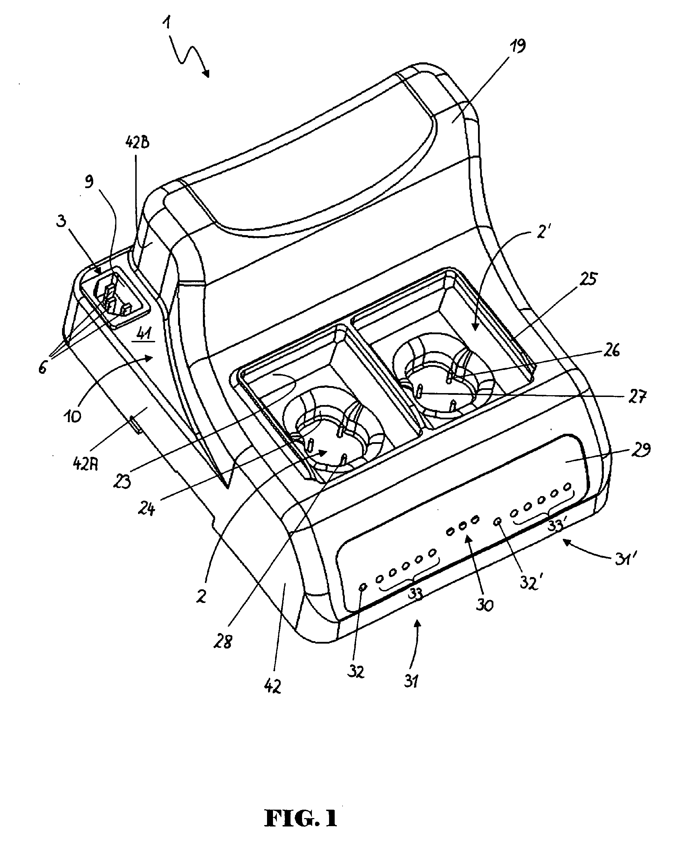

Figur 1 zeigt ein erfindungsgemäßes Ladegerät 1 mit einem Außengehäuse 19 in dem zwei elektrische Kontaktvorrichtungen 2, 2' angeordnet sind. Die Anzahl der Kontaktvorrichtungen 2, 2' ist rein exemplarisch, so dass das Ladegeräte selbstverständlich auch nur eine oder mehr als zwei Kontaktvorrichtungen aufweisen kann. Jede der beiden Kontaktvorrichtungen 2, 2' umfasst eine erste Ausnehmung 23 und eine zweite Ausnehmung 24, jeweils in Form eines Rücksprungs, die unterschiedliche Durchmesser und Formen aufweisen. Durch diese unterschiedlichen Ausformungen können Akkumulatoren mit unterschiedlichen Außenformen an das Ladegerät 1 angeschlossen und geladen werden. Ausnehmung 23 ist im Wesentlichen rechteckig geformt, während Ausnehmung 24 eine abgerundete, im Wesentlichen ovale Form aufweist. Ausnehmung 24 ist in Ausnehmung 23 angeordnet, so dass die Kontaktvorrichtungen 2, 2' einen stufenförmigen Aufbau aufweisen. Ein schmaler Steg 25 umgibt jeweils drei Seiten der beiden Kontaktvorrichtungen 2, 2'.

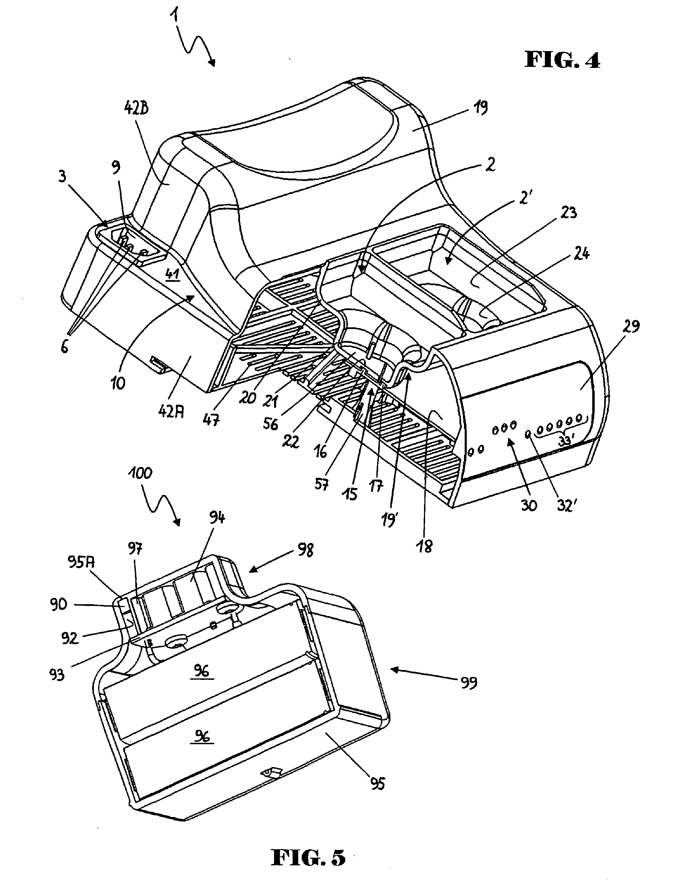

Ein Beispiel eines Akkumulators, der mit dem Ladegerät 1 geladen werden kann, ist in Figur 5 dargestellt. Der Akkumulator 100 besteht aus einem Gehäuse 95, das bevorzugt aus Kunststoff ausgeführt ist und das einen Körper 99, der zumindest teilweise in die Ausnehmung 23 einsetzbar ist, und einen Fortsatz 98, der zumindest teilweise in die Ausnehmung 24 einsetzbar ist, umhüllt. Im Gehäuse 95 sind eine oder mehrere wiederaufladbare Akkumulatorzellen 96 aufgenommen. Im Fortsatz 98 sind auf einer Leiterplatte 93 mehrere Kondensatoren 94 zum Abdecken von kurzfristigen Leistungsspitzen und mehrere elektrische Kontakte 97, zum Beispiel Kontaktbuchsen angeordnet. Leitungen verbinden die Leiterplatte 93 mit den Akkumulatorzellen 96.

Ein Aspekt der Erfindung betrifft die berührungslose Erkennung unterschiedlicher Akkumulatoren, insbesondere mittels Magnetsensoren (siehe weiter unten). Dabei kann es notwendig sein, dass die Akkumulatoren mit einem oder mehreren Magnetelementen versehen sind, wie dies beispielhaft in Figur 5 gezeigt wird. Magnetelement 90 ist in Fortsatz 98 in einer Bohrung 92 aufgenommen. Um eine möglichst klare Detektion eines oder mehrere magnetischer Parameter, wie zum Beispiel der Magnetfeldstärke oder der Polarität, zu gewährleisten, ist das Magnetelement 90 möglichst nahe an der Oberfläche des Akkumulators 100 angebracht und / oder ragt das Magnetelement 90 zumindest teilweise in die Gehäusewand des Gehäuse 95 hinein, so dass die Gehäusewand in diesem Bereich eine geringere Wandstärke 95A aufweist als in anderen Gehäuseabschnitten. Alternativ kann das Magnetelement 90 die Gehäusewand auch durchbrechen, wobei es dann bevorzugt in einer eigenen Kammer, die mit dem Inneren des Akkumulators nicht verbunden ist, enthalten ist, so dass keine Verschmutzungen in den Akkumulator eindringen können. Das Magnetelement 90 kann als magnetisierbare Spule oder als Permanentmagnet ausgeführt sein.

Die Kontaktvorrichtungen 2, 2' umfassen des Weiteren zwei elektrische Kontaktelemente 26, 27, zum Beispiel in Form von Kontaktstiften, die über eine erste Verbindungsvorrichtung 3 mit einer Stromquelle 4 verbindbar oder verbunden sind. Über diese beiden Kontaktelemente 26, 27, die beim Anschluss des Akkumulators 100 an das Ladegerät 1 in den Kontaktbuchsen 97 aufgenommen werden, erfolgt in bekannter Weise das Wiederaufladen der Akkumulatorzellen 96 des Akkumulators 100.

Ein drittes elektrisches Kontaktelement 28, ebenfalls beispielhaft als Kontaktstift ausgebildet, dient zur Temperaturüberwachung des Akkumulators 100 während des Ladevorgangs. Dazu ist bevorzugt ein Temperatursensor im Inneren des Akkumulators 100 angeordnet. Beim Anschluss des Akkumulators 100 an das Ladegerät 1 wird der Temperatursensor über Kontakt 28 mit einer Temperatur-Auswerteschaltung im Inneren des Ladegeräts 1 verbunden. Die Temperatur-Auswerteschaltung wertet die vom Temperatursensor erhaltenen Signale aus und reagiert auf das Überschreiten eines ersten Temperaturschwellenwerts oder das Unterschreiten eines zweiten Temperaturschwellenwerts, zum Beispiel durch Abgabe eines akustischen oder visuellen Warnhinweises oder durch Unterbrechen des Ladevorgangs. Auf diese Weise wird das Laden des Akkumulators 100 außerhalb eines erwünschten Temperaturbereichs und damit eine etwaige Schädigung des Akkumulators 100 verhindert. Bevorzugt ist der Temperatursensor als Widerstand im Akkumulator 100 ausgebildet, dessen erstes Ende mit Kontakt 28 und dessen zweites Ende auf Masse verbunden ist.

Die Kontaktelemente 26, 27 sind mit einer im Inneren des Ladegeräts 1 angeordneten Ladeschaltung verbunden. In bekannter Weise bereitet die Ladeschaltung den von der Stromquelle 4 über die erste Verbindungsvorrichtung 3 zu den Kontakten 26, 27 fließenden Strom derart auf, dass er zum Laden der Akkumulatoren 100 geeignet ist, zum Beispiel durch Gleichrichten des Ladestroms, Transformation auf die vom Akkumulator 100 benötigte Spannung oder Einstellen der benötigten Stromstärke.

Das Ladegerät 1 weist bevorzugt an seiner Vorderseite eine Anzeige 29 auf, um den Anwender über unterschiedliche Betriebszustände, Betriebsparameter oder andere relevante Daten zu informieren. Die Anzeige 29 ist in den Figuren 1 und 4 als Leuchtanzeige ausgebildet, die mehrere Beleuchtungsmittel, bevorzugt Leuchtdioden (LEDs) umfasst. Selbstverständlich können auch andere bekannte Anzeigevorrichtungen, wie zum Beispiel LCD-Anzeigen verwendet werden. Soll der Anwender die Möglichkeit haben zum Beispiel Parameter oder Programme auswählen zu können, so kann als Anzeige auch ein so genannter Touch-Screen verwendet werden. Alternativ oder ergänzend können zur Eingabe oder Auswahl von Parametern auch Taster verwendet werden.

Anzeige 29 umfasst mehrere Anzeigebereiche: Ein erster Bereich 30 mit drei LEDs lässt erkennen, ob das Ladegerät 1 betriebsbereit ist. Ein zweiter Bereich 31, 31' ist den jeweiligen Kontaktvorrichtungen 2, 2' zugeordnet und beinhaltet bevorzugt eine Fehleranzeige 32, 32', die zum Beispiel den Anschluss eines kaputten Akkumulators oder ein Gebrechen der Kontaktvorrichtungen 2, 2' anzeigt, und eine Füllstandsanzeige 33, 33' zur Darstellung des Fortschritt des Ladevorgangs. Anzeige 29 ist in bekannter Weise mit Schaltungen im Inneren des Ladegeräts verbunden, die Messwerte und Sensorsignale von Sensoren, Detektoren, Messkreisen oder -schaltungen empfangen und verarbeiten und entsprechend die LEDs der Anzeigenbereiche 30 - 33, 33' ein- bzw. ausschalten.

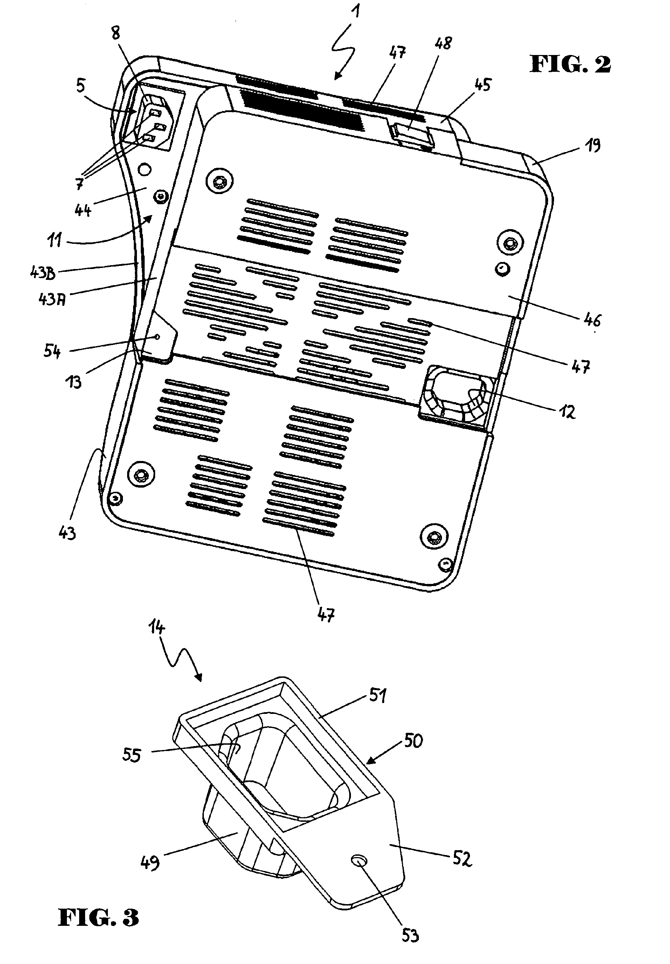

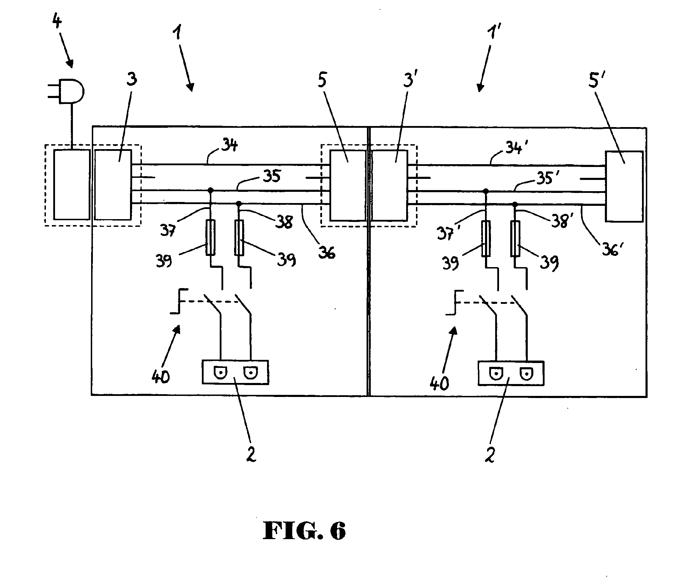

Wie aus den Figuren 1 und 2 ersichtlich ist, weist das Ladegerät 1 eine erste Verbindungsvorrichtung 3 und eine zweite Verbindungsvorrichtung 5 auf. Verbindungsvorrichtung 3 des Ladegeräts 1 dient zur Verbindung des Ladegeräts 1 und aller darin enthaltenen Verbraucher, insbesondere der Kontaktvorrichtungen 2, 2' mit einer Stromquelle 4 und ist in einer Öffnung des Gehäuses 19 angeordnet. Die zweite Verbindungsvorrichtung 5 ist mit der ersten Verbindungsvorrichtung 3 elektrisch verbunden und ebenfalls in einer Öffnung des Gehäuses 19 aufgenommen. Die zweite Verbindungsvorrichtung 5 ist derart ausgebildet, dass sie mit einer zweiten Vorrichtung zum Laden von Akkumulatoren 1' (siehe Figur 6) elektrisch verbindbar ist, so dass die zweite Vorrichtung zum Laden von Akkumulatoren 1' über die zweite Verbindungsvorrichtung 5 mit der Stromquelle 4 elektrisch verbindbar ist.

Die erste Verbindungsvorrichtung 3 umfasst mehrere stiftförmige, elektrische Kontakte 6, die zweite Verbindungsvorrichtung 5 mehrere buchsenförmige Kontakte 7. Beide Verbindungsvorrichtungen 3, 5 können jedoch selbstverständlich auch aus allen anderen bekannten Formen von Kontakten bestehen, so zum Beispiel aus stift- oder buchsenförmigen Kontakten, aus Federkontakten oder aus Plankontakten. Wird als Stromquelle 4 Wechselstrom verwendet, so weist die beiden Verbindungsvorrichtungen 3, 5 drei Kontakte auf, die als L-, N- und PE-Kontakte ausgebildet sind.

In Figur 6 ist schematisch die Verbindung zweier Vorrichtungen zum Laden von Akkumulatoren 1, 1'dargestellt. Das Ladegerät 1' entspricht in Aufbau und Funktion dem Ladegerät 1 aus den Figuren 1 und 2, bevorzugt ist zumindest der Aufbau des Ladegeräts 1' identisch mit dem Ladegerät 1. Aus Gründen der besseren Übersichtlichkeit wurde bei beiden Ladegeräten 1, 1' nur jeweils eine Kontaktvorrichtung 2 dargestellt. Ladegerät 1 ist über die erste Verbindungsvorrichtung 3 lösbar mit einer Stromquelle 4, hier in Form des allgemeinen Stromversorgungsnetzes, verbunden. Die erste Verbindungsvorrichtung 3, 3' jedes Ladegeräts 1, 1' ist so ausgebildet, dass sie wahlweise an die Stromquelle 4 oder an ein anderes Ladegerät anschließbar ist. Drei Leitungen 34, 35, 36, die als L-, N- und PE-Leitungen ausgeführt sind, verbinden die erste Verbindungsvorrichtung 3 mit der zweiten Verbindungsvorrichtung 5. Die zweite Verbindungsvorrichtung 5 ist lösbar mit der ersten Verbindungsvorrichtung 3' des Ladegeräts 1' verbunden, so dass die Stromversorgung des zweiten Ladegeräts 1' über die Verbindungsvorrichtungen 3, 5 und die Leitungen 34-36 erfolgt. Zwischen dem Schalter 40 und der Kontaktvorrichtung 2 befindet sich die Ladeschaltung (nicht dargestellt), die unter anderem ein Schaltnetzteil oder einen Transformator umfassen kann.

Auch Ladegerät 1' weist drei Leitungen 34', 35', 36' und eine zweite Verbindungsvorrichtung 5' auf, so dass an dieses Ladegerät 1' ein weiteres Ladegerät anschließbar ist. Auf diese Weise lässt sich eine beliebig lange Kette aus Ladegeräten zusammenfügen, wobei die Stromversorgung jedes Ladegeräts über die vorhergehenden, also zwischen der Stromquelle 4 und dem Ladegerät angeordneten Ladegeräte erfolgt. Jedem Ladegerät steht somit die gleiche Versorgungsspannung zur Verfügung.

Wie aus Figur 6 des Weiteren erkennbar ist, zweigen von den Leitungen 35, 35', 36, 36', die als L- und N-Leiter dienen, zwei weitere Leitungen 37, 37', 38, 38' ab, die die Kontaktvorrichtung 2 und gegebenenfalls weitere Kontaktvorrichtungen mit der ersten Verbindungsvorrichtung 3, 3' und der Stromquelle 4 verbinden. Bevorzugt sind an den Leitungen 37, 37', 38, 38' elektrische Sicherungen 39 zur Strombegrenzung und ein Schalter 40 zum Öffnen / Schließen der Verbindung der Kontaktvorrichtung 2 mit der Verbindungsvorrichtung 3 vorgesehen.

Bevorzugt sind die Verbindungsvorrichtungen 3, 3', 5, 5' so ausgebildet, dass durch das Zusammenfügen der Verbindungsvorrichtungen 3, 3', 5, 5' eine mechanische, insbesondere eine form- oder kraftschlüssige Verbindung, besonders bevorzugt eine Steckverbindung zwischen der ersten und zweiten Vorrichtung zum Laden von Akkumulatoren 1, 1' herstellbar ist, so dass zum Trennen der beiden Ladegeräte 1, 1' ein zusätzlicher Kraftaufwand notwendig ist. Die Verbindungsvorrichtungen 3, 3', 5, 5' dienen somit zusätzlich auch als mechanische Verbindungselemente. Damit wird in vorteilhafter Weise ein verbesserter Zusammenhalt zwischen den Ladegeräten 1, 1' erreicht und es können mehrere miteinander verbundene Ladegeräte als eine Einheit gehandhabt werden. Insbesondere ist es dadurch auch möglich, eine Verbindung zwischen den Ladegeräten 1, 1' zu schaffen, bei der keine außerhalb der Ladegeräte 1, 1' verlaufende Kabel oder Leitungen benötigt werden. Wie aus den Figuren 1 und 2 ersichtlich, ist eine der beiden Verbindungsvorrichtungen 3, 5, bevorzugt die zweite Verbindungsvorrichtung 5 als Vorsprung, Stecker oder Steckglied 8 und die andere der beiden Verbindungsvorrichtungen 3, 5, bevorzugt die erste Verbindungsvorrichtung 3 als Rücksprung, Buchse oder hohle Steckaufnahme 9 zur Aufnahme des Vorsprungs 8 ausgebildet. Vorsprung 8 und Rücksprung 9 können zur Erhöhung des mechanischen Zusammenhalts spezifische Formen aufweisen, zum Beispiel als Vieleck ausgebildet sein. Steckglied 8 und Steckaufnahme 9 können als eigenständige, zumindest teilweise aus Kunststoff hergestellte Bauteile ausgeführt sein, die in Öffnungen des Gehäuses 19 eingefügt und darin befestigt sind.

Ladegerät 1, insbesondere das Gehäuse 19 weist bevorzugt einen Vorsprung 11 und einen Rücksprung 10 auf, wobei eine der beiden Verbindungsvorrichtungen 3, 5, bevorzugt die zweite Verbindungsvorrichtung 5 am Vorsprung 11 und die andere der beiden Verbindungsvorrichtungen 3, 5, bevorzugt die erste Verbindungsvorrichtungen 3 am Rücksprung 10 angeordnet ist. Rücksprung 10 und Vorsprung 11 können gleich oder unterschiedlich geformt sein, verschiedenste, zum Beispiel gebogene, eckige oder gewinkelte Formen aufweisen und an unterschiedlichen Bereich des Gehäuses 19 vorgesehen sein, zum Beispiel an einer der Seitenwände 42, 43 oder an der Oberseite und Unterseite 46 des Ladegeräts 1, 1'. Unabhängig von den möglichen Ausführungsformen ist für dieses bevorzugte Ausführungsbeispiel primär ausschlaggebend, dass der Vor- und Rücksprung 10, 11 so angeordnet oder derart ausgeführt sind, dass eine möglichst Platz sparende Anordnung oder Stapelung der miteinander verbundenen Ladegeräte 1, 1' möglich wird. Unter einer Platz sparenden Anordnung wird insbesondere eine Anordnung verstanden, bei der die Ladegeräte 1, 1' nur einen geringen Abstand voneinander aufweisen oder Teile der Gehäuse 19 von zwei Ladegeräten 1, 1 einander berühren und / oder für die Verbindung der Ladegeräte 1, 1' keine zusätzlichen, außerhalb der Ladegeräte 1, 1' verlaufende Kabel oder Leitungen benötigt werden. Die Platz sparenden Anordnung der Ladegeräte 1, 1' umfasst sowohl deren Anordnung nebeneinander, hintereinander als auch übereinander.

Bei der Ausführungsform des Ladegeräts nach den Figuren 1 und 2 ist die erste Verbindungsvorrichtung 3 an einem Rücksprung 10 angeordnet, der durch eine Stufe 41 in einer Seitenwand 42 des Gehäuses 19 gebildet ist. Die Seitenwand 42 weist damit über einen Teilabschnitt ihrer Länge im Bereich der Stufe 41 einen im Wesentlichen gerade verlaufenden, unteren Wandabschnitt 42A und einen gebogen oder geschwungen verlaufenden, vom unteren Wandabschnitt 42A weg weisenden oberen Wandabschnitt 42B auf. Die zweite Verbindungsvorrichtung 5 ist an der der Seitenwand 42 gegenüber liegenden Seitenwand 43 des Ladegeräts 1 an einem Vorsprung 11 angeordnet. Vorsprung 11 wird ebenfalls durch eine Stufe 44 gebildet, so dass Seitenwand 43 einen im Wesentlichen gerade verlaufenden, unteren Wandabschnitt 43A und einen gebogen oder geschwungen verlaufenden, vom unteren Wandabschnitt 43A weg weisenden oberen Wandabschnitt 43 B hat. Vorsprung 11 und Rücksprung 10 sind somit im Wesentlichen komplementär geformt, so dass sie beim Zusammenfügen zweier Ladegeräte 1, 1' fließend und kompakt ineinander greifen.

An der Rückwand 45 und der Unterseite 46 des Ladegeräts 1 sind eine Vielzahl an Lüftungsschlitzen 47 vorgesehen. Ein Bedienelement 48 an der Rückwand 45 dient zum Ein- bzw. Ausschalten des Ladegeräts 1 und ist mit Schalter 40 verbunden. Auf der Unterseite 46 des Ladegeräts sind des Weiteren eine erste Anschlussvorrichtung 12 und eine zweite Anschlussvorrichtung 13 vorgesehen. Die Anschlussvorrichtungen 12, 13 dienen zur mechanischen Verbindung der Ladegeräte 1, 1', sie können zum Beispiel als Steck- und / oder als Schraubverbindung ausgeführt sein.

Zur Verbindung der Ladegeräte 1, 1' wird ein separates mechanisches Verbindungselement verwendet, das in den Anschlussvorrichtungen 12, 13 aufnehmbar, damit verbindbar oder daran befestigbar ist. Ein bevorzugtes Ausführungsbeispiel eines derartigen Verbindungselements ist in Figur 3 dargestellt und mit dem Bezugszeichen 14 versehen. Verbindungselement 14 besteht aus einem Körper 49, der zum Beispiel länglich, rund, rechteckig oder mehrseitig ausgebildet sein kann und als Steckelement dient, das in die als hohle Steckaufnahme ausgebildete Anschlussvorrichtung 12, die im Wesentlichen die gleiche Form wie Körper 49 hat, einsetzbar ist. An den Körper 49 schließt eine Basis 50 an, die aus einem Rahmen 51 und einem Fortsatz 52 mit einer Bohrung 53 gebildet wird. Fortsatz 52 ist derart geformt, dass er in Anschlussvorrichtung 13 einsetzbar und am Ladegerät befestigbar ist, zum Beispiel mittels einer Schraube, die die Bohrung 53 durchsetzt und in einer weiteren Bohrung 54 mit Innengewinde im Ladegerät 1 verschraubbar ist.

Jedem Ladegerät 1 ist ein Verbindungselement 14 zugeordnet, das in die Anschlussvorrichtung 12 einsetzbar ist, wobei die Anschlussvorrichtung 12 so an der Unterseite 46 des Ladegeräts 1 angebracht ist, dass zumindest ein Teil des Fortsatzes 52 mit der Bohrung 53 über die Seitenwand 42, 43 des Ladegeräts 1 hinausragt. Wird dieses Ladegerät 1 nun mit einem weiteren Ladegerät 1' verbunden, so kann Fortsatz 52 mit der Anschlussvorrichtung 13 des Ladegeräts 1' verschraubt werden kann. Sind die Verbindungsvorrichtungen 3, 3', 5, 5' auch als mechanische Verbindungselemente ausgebildet, so ist klarerweise darauf zu achten, dass die Abstände zwischen der ersten Verbindungsvorrichtung 3, 3' und der ersten Anschlussvorrichtung 12 und zwischen der zweiten Verbindungsvorrichtung 5, 5' und der zweiten Anschlussvorrichtung 13 gleich sind.

Bevorzugt ist der Körper 49 von Verbindungselement 14 als Hohlkörper mit einem Hohlraum 55 ausgebildet. Hohlraum 55 hat im Wesentlichen die gleiche Form wie das Steckglied 8 der zweiten Verbindungsvorrichtung 5 und die Innenabmessungen des Hohlraums 55 entsprechen in etwa den Außenabmessungen des Steckglieds 8. Verbindungselement 14 kann somit auf Steckglied 8 aufgesetzt und an Stufe 44 durch Bohrung 53 und eine weitere Bohrung mit Innengewinde in Stufe 44 verschraubt werden. Verbindungselement 14 dient somit zusätzlich als Schutzkappe für das Steckglied 8, solange an dieses Steckglied 8 noch keine Steckaufnahme 9 einer ersten Verbindungsvorrichtung 3' eines weiteren Ladegeräts 1' angeschlossen ist. Wird ein weiteres Ladegerät 1' angeschlossen, so muss Verbindungselement 14 von Steckglied 8 abgenommen werden und kann umgehend zur mechanischen Verbindung der beiden Ladegeräte 1, 1' verwendet werden.

Figur 4 zeigt in einer teilweisen Schnittdarstellung einen Schnitt durch die Kontaktvorrichtung 2 und darunter liegende Bereiche des Ladegeräts 1. Die Kontaktvorrichtungen 2, 2' sind so ausgebildet, dass sie mit einer Stromquelle 4 verbunden oder verbindbar sind und dass Akkumulatoren 100 mit unterschiedlichen Ladeanforderungen anschließbar sind. Die Akkumulatoren mit unterschiedlichen Ladeanforderungen können zum Beispiel unterschiedliche Ladeverfahren oder unterschiedliche Arten von Ladeströmen, insbesondere unterschiedliche Spannungen und / oder Stromstärken benötigen. Sie können, wie bereits weiter oben beschrieben, zusätzlich auch unterschiedlich geformt sein.

Kontaktvorrichtung 2 weist einen Gehäuseabschnitt 19' auf, der Teil des Gehäuses 19 des Ladegeräts 1 ist. Ein Teil des Gehäuses 19' bildet den Boden 56 der Kontaktvorrichtung 2 und der Aufnahme 24. Unterhalb des Bodens 56 im Inneren des Ladegeräts 1 ist zumindest ein Magnetsensor 16, 17 angeordnet. Der oder die Magnetsensoren 16, 17 sind Teil einer berührungslosen Identifikationsvorrichtung 15 zur Erkennung von Akkumulatoren mit unterschiedlichen Ladeanforderungen.

Der oder die Magnetsensoren 16, 17, die zum Beispiel als Hall-Sensoren oder als Reed-Kontakte ausgebildet sein können, bestimmen bei der Erkennung des Akkumulators eine oder mehrere magnetische Parameter eines oder mehrerer Magnetelemente, die mit dem Akkumulator verbunden sind. In Figur 5 ist beispielhaft ein derartiger Akkumulator 100 mit einem Magnetelement 90 dargestellt. Bei den detektierten magnetischen Parametern kann es sich bevorzugt um die magnetischen Polarität, die Magnetfeldstärke oder die magnetische Feldrichtung handeln. Entsprechend werden als Magnetsensoren 16, 17 Sensoren verwendet, die das Vorhandensein eines Magnetfelds oder die magnetische Polarität oder die Magnetfeldstärke oder die Feldrichtung detektieren.

Um eine möglichst zuverlässige Detektion der magnetischen Parameter zu erreichen, soll während des Identifikationsvorgangs der Abstand zwischen dem zumindest einen Magnetelement 90 und dem zumindest eine Magnetsensor 16, 17 möglichst gering sein. Bevorzugt wird daher der zumindest eine Magnetsensor 16, 17 möglichst nahe am Boden der 56 der Kontaktvorrichtung 2 angeordnet. Besonders bevorzugt weist das Gehäuse 19' der Kontaktvorrichtung 2 eine Gehäusewand 20 mit zumindest einem Bereich einer ersten Wandstärke 21 und mit einem Bereich einer zweiten, geringeren Wandstärke 22 auf, wobei der zumindest eine Magnetsensor 16, 17 im Wesentlichen im Bereich der zweiten, geringeren Wandstärke 22 angeordnet ist.

Der Aufbau der Kontaktvorrichtung 2' und gegebenenfalls weiterer Kontaktvorrichtungen des Ladegeräts 1 sowie die Anordnung des zumindest einen Magnetsensors 16, 17 gleicht dem beschriebene Aufbau der Kontaktvorrichtung 2.

Im Inneren des Ladegeräts 1 ist des Weiteren eine Ladeschaltung vorgesehen, die mit der Identifikationsvorrichtung 15 verbunden ist. Der zumindest eine Magnetsensor 16, 17 kann somit bei Detektion eines magnetischen Parameters ein Identifikationssignal an die Ladeschaltung weiterleiten, das die Ladeschaltung verarbeitet und zur Erkennung der unterschiedlichen, anschließbaren Akkumulatorentypen nutzt. Hat die Ladeschaltung den an die Kontaktvorrichtung 2, 2' angeschlossenen Akkumulator erkannt, so bestimmt sie die für diesen Akkumulator benötigte(n) Ladeanforderung(en). Anschließend lädt sie den Akkumulator gemäß dieser Ladeanforderung, zum Beispiel mit dem für diesen Akkumulator passenden Ladeverfahren oder mit dem geeigneten Ladestrom. Die Ladeanforderungen für die unterschiedlichen Akkumulatortypen können in einem Speicher, der im Ladegerät 1 angeordnet oder mit diesem verbunden ist, abgelegt sein. Alternativ schaltet die Identifikationsvorrichtung 15 direkt die Parameter der Ladeschaltung, womit in vorteilhafter Weise kein Mikrokontroller und kein Speicher benötigt werden.

Im Wesentlichen im Bereich jeder elektrischen Kontaktvorrichtung 2, 2' können ein Magnetsensor 16, 17 oder mehrere Magnetsensoren 16, 17 gleichen oder unterschiedlichen Typs angeordnet sein. Liegt nur ein Magnetsensor 16, 17 vor, der bei Vorhandensein eines Magnetfelds ein Identifikationssignal abgibt, so können damit zwei Akkumulatorentypen unterschieden werden, wobei einer der beiden Akkumulatoren mit einem Magnetelement versehen ist und der andere Akkumulator kein Magnetelement trägt. Erhält die Ladeschaltung ein Identifikationssignal, zum Beispiel wenn das Magnetfeld detektiert wird, so lädt sie den Akkumulator gemäß ersten Ladeanforderungen, erhält sie kein Identifikationssignal, so lädt sie den Akkumulator gemäß zweiten Ladeanforderungen. Sind jedoch mehrere derartige Magnetsensoren 16, 17 pro Kontaktvorrichtung 2, 2' vorgesehen, so können mehrere Akkumulatorentypen unterschieden werden, in dem die Akkumulatoren keinen, einen oder mehrere Magnetelemente, die an unterschiedlichen Stellen am Akkumulator befestigt sind, aufweisen. Die Erkennung des jeweiligen Akkumulators erfolgt damit nicht alleine über die Detektion eines Magnetfelds bzw. dessen Nicht-Vorhandensein, sondern auch an welchem Ort ein Magnetfeld detektiert wird.

Wird als Magnetsensor 16, 17 ein Sensor verwendet, der zur Abgabe eines Identifikationssignals in Abhängigkeit der detektierten magnetischen Polarität ausgebildet ist, so können ebenfalls zwei Akkumulatoren unterschieden werden, wobei einer der beiden Akkumulatoren ein Magnetelement enthält, dessen Südpol zum Magnetsensor 16, 17 gerichtet ist, wenn der Akkumulator an die Kontaktvorrichtung 2, 2' angeschlossen ist, und der zweite Akkumulator ein Magnetelement enthält, dessen Nordpol zum Magnetsensor 16, 17 gerichtet ist, wenn der Akkumulator an die Kontaktvorrichtung 2, 2' angeschlossen ist. Weist das Ladegerät mehrere Sensoren auf, so können wiederum mehrere Typen von Akkumulatoren erkannt werden, in dem jeder Sensor ein Identifikationssignal abgibt, wenn die Polarität des ihm zugeordneten Magnetelements für ihn erkennbar ist.

Als alternativer Sensortyp ist ein Magnetsensor 16, 17 verwendbar, der zur Abgabe eines Identifikationssignals in Abhängigkeit der detektierten Magnetfeldstärke ausgebildet ist. Der Vorteil eines derartigen Sensors liegt darin, dass er unterschiedliche Magnetfeldstärken detektieren kann, so dass zur Unterscheidung mehrere Akkumulatoren nur ein Sensor benötigt wird und die Akkumulatoren jeweils nur ein Magnetelement benötigen, wobei jedes Magnetelement eine unterschiedliche Feldstärke aufweist. Selbstverständlich ist es jedoch auch hier möglich, jede Kontaktvorrichtung 2, 2' mit mehreren Feldstärkesensoren und jeden Akkumulator mit mehreren Magnetelementen zu versehen.

Des Weiteren kann der Magnetsensor 16, 17 zur Abgabe eines Identifikationssignals in Abhängigkeit der detektierten Feldrichtung ausgebildet sein. Dieser Sensortyp erkennt unterschiedliche Ausrichtungen von Feldrichtungen, so dass auch hier zur Unterscheidung mehrere Akkumulatoren nur ein Sensor benötigt wird. Zur Erkennung der Akkumulatoren reicht wiederum ein Magnetelement aus, das auf jedem Akkumulator unterschiedlich ausgerichtet ist, so dass sich deren Feldrichtung unterscheidet. Selbstverständlich ist es jedoch auch hier möglich, jede Kontaktvorrichtung 2, 2' mit mehreren Feldrichtungssensoren und jeden Akkumulator mit mehreren Magnetelementen zu versehen.

Unter dem Begriff Magnetsensor werden erfindungsgemäß sowohl Einzelsensoren verstanden, zum Beispiel ein Hall-Sensor oder ein Reed-Kontakt, wie auch die Zusammenfassung mehrerer Einzelsensoren zu einer funktionellen Einheit, so dass sie die oben angeführten magnetischen Parameter detektieren können.

Um eine gute Signal- oder magnetische Parametererkennung ohne gegenseitige, unerwünschte Beeinflussung zu gewährleisten, ist es insbesondere bei Verwendung von zwei oder mehr Magnetsensoren 16, 17 pro Kontaktvorrichtung 2, 2' vorteilhaft, den Abstand zwischen dem Magnetsensor 16, 17 und dem zugeordneten Magnetelement der Akkumulatoren geringer zu bemessen als den Abstand zwischen zwei benachbarten Magnetelementen bzw. zwischen zwei benachbarten Magnetsensoren 16, 17. Als einem Magnetsensor zugeordnetes Magnetelement wird dabei jenes Magnetelement bezeichnet, dessen magnetische Eigenschaft durch diesen Magnetsensor detektiert wird, wenn ein Akkumulator an eine Kontaktvorrichtung 2, 2' angeschlossen ist. Der Abstand zwischen einem Magnetsensor und seinem zugeordneten Magnetelement soll bevorzugt geringer als 5,0 mm, besonders bevorzugt gleich oder geringer 3,0 mm sein. Der Abstand zwischen zwei Magnetelementen und entsprechend zwischen zwei Magnetsensoren 16, 17 soll bevorzugt größer als 8,0 mm, besonders bevorzugt größer 16,0 mm sein.

Die Magnetsensoren 16, 17 sind im Inneren des Ladegeräts auf einer Trägervorrichtung 18, bevorzugt auf einer Platine befestigt. Die Platine wird von Träger- und Stützelementen 57 getragen, so dass sie sich in unmittelbarer Nähe des Bodens 56 der Kontaktvorrichtung 2 befindet. Bevorzugt ist auf der Trägervorrichtung 18 auch die Ladeschaltung angeordnet. Besonders bevorzugt sind auf der Trägervorrichtung 18 noch weitere Schaltungen des Ladegeräts 1, zum Beispiel eine Temperatur-Auswerteschaltung zur Überwachung der Temperatur des Akkumulators 100 oder Schaltungen zum Betrieb der LEDs der Anzeige 29, und die LEDs der Anzeige 29 angeordnet.

Erfindungsgemäß können des Weiteren auch unterschiedliche Ladegeräte miteinander verbunden werden, so zum Beispiel Ladegeräte mit einer unterschiedlichen Anzahl von Kontaktvorrichtungen, mit unterschiedlich geformten oder unterschiedlich großen Kontaktvorrichtungen, Ladegeräte die unterschiedliche Ladeverfahren anwenden usw. Wesentlich ist, dass die Verbindungsvorrichtungen derart ausgebildet sind, dass die Ladegeräte miteinander verbindbar sind, so dass die Stromversorgung eines Ladegeräts über das davor angeordnete Ladegerät und somit durch eine gemeinsame Energiequelle erfolgt.

## Patentansprüche

1. Vorrichtung zum Laden von Akkumulatoren (1, 1') mit zumindest einer elektrischen Kontaktorrichtung (2, 2') zum Anschluss eines Akkumulators (100), wobei die zumindest eine Kontaktvorrichtung (2, 2') mit einer Stromquelle (4) verbunden oder verbindbar ist und wobei an die zumindest eine Kontaktvorrichtung (2, 2') Akkumulatoren (100) mit unterschiedlichen Ladeanforderungen anschließbar sind, mit einer Identifikationsvorrichtung (15) zur Erkennung der unterschiedlichen Akkumulatoren (100) und mit einer Ladeschaltung zum Laden der Akkumulatoren (100) gemäß ihren jeweiligen Ladeanforderungen, **dadurch gekennzeichnet, dass** die Identifikationsvorrichtung (15) zumindest ein Magnetelement und zumindest einen Magnetsensor (16, 17) zur Detektion zumindest eines magnetischen Parameters des zumindest einen Magnetelements umfasst, wobei der zumindest eine Magnetsensor (16, 17) zur Weiterleitung eines Identifikationssignals mit der Ladeschaltung verbunden ist, wobei das zumindest eine Magnetelement und der zumindest eine Magnetsensor (16, 17) so ausgebildet sind, dass durch eine mit einem anschließbaren Akkumulator (100) verbundene Abschirm- und / oder Verstärkungsvorrichtung der zumindest eine magnetische Parameter des zumindest einen Magnetelements veränderbar und diese Veränderung durch den zumindest einen Magnetsensor (16, 17) detektierbar ist, und wobei die Ladeschaltung zur Erkennung der unterschiedlichen, anschließbaren Akkumulatoren (100) auf Basis des Identifikationssignals und zur Auswahl der den unterschiedlichen Akkumulatoren (100) zugeordneten Ladeanforderung in Abhängigkeit des Identifikationssignals ausgebildet ist.

2. Vorrichtung zum Laden von Akkumulatoren (1, 1') nach Anspruch 1, **gekennzeichnet durch** zumindest einen Magnetsensor (16, 17), der zur Abgabe eines Identifikationssignals bei Vorhandensein eines Magnetfelds ausgebildet ist, und / oder **gekennzeichnet durch** zumindest einen Magnetsensor (16, 17), der zur Abgabe eines Identifikationssignals in Abhängigkeit der detektierten magnetischen Polarität ausgebildet ist, und / oder **gekennzeichnet durch** zumindest einen Magnetsensor (16, 17), der zur Abgabe eines Identifikationssignals in Abhängigkeit der detektierten Magnetfeldstärke ausgebildet ist, und / oder **gekennzeichnet durch** zumindest einen Magnetsensor (16, 17), der zur Abgabe eines Identifikationssignals in Abhängigkeit der detektierten Feldrichtung ausgebildet ist.

3. Vorrichtung zum Laden von Akkumulatoren (1, 1') nach einem der vorhergehenden Ansprüche, **gekennzeichnet durch**
mehrere Magnetsensoren (16, 17) eines oder unterschiedlichen Typs, wobei die Magnetsensoren (16, 17) an unterschiedlichen Stellen im Wesentlichen im Bereich der Kontaktvorrichtung (2, 2') angeordnet sind.

4. Vorrichtung zum Laden von Akkumulatoren (1, 1') nach einem der vorhergehenden Ansprüche, **dadurch gekennzeichnet, dass**
der zumindest eine Magnetsensor (16, 17) und die Ladeschaltung auf einer gemeinsamen Trägervorrichtung (18), bevorzugt auf einer gemeinsamen Platine angeordnet sind.

5. Vorrichtung zum Laden von Akkumulatore (1, 1') nach einem der vorhergehenden Ansprüche, **dadurch gekennzeichnet, dass**
die Kontaktvorrichtung (2, 2') ein Gehäuse (19') mit einer Gehäusewand (20) umfasst, wobei die Gehäusewand (20) zumindest einen Bereich einer ersten Wandstärke (21) und einen Bereich einer zweiten, geringeren Wandstärke (22) aufweist, und wobei der zumindest eine Magnetsensor (16, 17) im Wesentlichen im Bereich der zweiten, geringeren Wandstärke (22) angeordnet ist.

6. Vorrichtung zum Laden von Akkumulatoren (1, 1') nach einem der vorhergehenden Ansprüche, **gekennzeichnet durch**
eine erste, mit der Kontaktvorrichtung (2, 2') elektrisch verbundenen Verbindungsvorrichtung (3, 3') und **gekennzeichnet durch** eine zweite Verbindungsvorrichtung (5, 5'), die mit der ersten Verbindungsvorrichtung (3) elektrisch verbunden ist und die so ausgebildet ist, dass sie mit einer zweiten Vorrichtung zum Laden von Akkumulatoren (1, 1') elektrisch verbindbar ist, so dass die zweite Vorrichtung zum Laden von Akkumulatoren (1, 1') über die zweite Verbindungsvorrichtung (5, 5') mit der Stromquelle (4) elektrisch verbindbar ist.

7. Akkumulator zum Anschluss an eine Vorrichtung zum Laden von Akkumulatoren (1, 1') nach einem der vorhergehenden Ansprüche, mit zumindest einer mehrmals elektrisch aufladbaren Akkumulatorzelle (96) und mit elektrischen Kontakten (97), die mit der zumindest einen Akkumulatorzelle (96) verbunden sind und über die der Akkumulator an eine Vorrichtung zum Laden von Akkumulatoren (1, 1') anschließbar ist, **gekennzeichnet durch**
zumindest eine Abschirm- und / oder Verstärkungsvorrichtung aus einem magnetisch leitfähigen Material, **durch** die ein magnetischer Parameter eines Magnetelements der Identifikationsvarrichtung (15) der Vorrichtung zum Laden von Akkumulatoren (1, 1') derart veränderbar ist, insbesondere verstärkbar, bündelbar, abschwächbar oder in seiner Richtung veränderbar ist, dass die Ladeanforderung des Akkumulators von der Ladeschaltung der Vorrichtung zum Laden von Akkumulatoren (1, 1') erkennbar ist, so dass der Akkumulator gemäß dieser Ladeanforderung geladen wird.

8. Akkumulator nach Anspruch 7, **dadurch gekennzeichnet, dass**
die Abschirm- und / oder Verstärkungsvorrichtung ein Element aus Weicheisen umfasst.

9. Akkumulator nach Anspruch 7 oder 8, **dadurch gekennzeichnet, dass**
der Akkumulator kein Magnetelement aufweist.

10. Akkumulator nach einem der Ansprüche 7-9, **dadurch gekennzeichnet, dass**
die Abschirm- und / oder Verstärkungsvorrichtung als Stab, Leiste oder Platte ausgebildet ist, die im oder am Akkumulator angebracht ist.

## Claims

1. A device for charging batteries (1, 1') with at least one electric contact device (2, 2') for connecting a battery (100), wherein the at least one contact device (2, 2') is connected or connectable to an electric power source (4), and wherein batteries (100) having different charging requirements can be connected to the at least one contact device (2, 2'), with an identification device (15) for recognition of the different batteries (100) and with a charging circuit for charging the batteries (100) according to their respective charging requirements, **characterized in that**
the identification device (15) comprises at least one magnetic element and at least one magnetic sensor (16, 17) for detection of at least one magnetic parameter of the at least one magnetic element, wherein the at least one magnetic sensor (16, 17) for relaying an identification signal is connected to the charging circuit, wherein the at least one magnetic element and the at least one magnetic sensor (16, 17) are configured so that the at least one magnetic parameter of the at least one magnetic element can be varied by a shielding and/or amplifying device connected to a connectable battery (100) and this variability being detectable by the at least one magnetic sensor (16, 17), and wherein the charging circuit is designed for recognition of the various connectable batteries (100) based on the identification signal and for selection of the charging requirement assigned to the different batteries (100) as a function of the identification signal.

2. The device for charging batteries (1, 1') according to claim 1. **characterized by**
at least one magnetic sensor (16, 17), which is designed for emitting an identification signal in the presence of a magnetic field, and/or **characterized by** at least one magnetic sensor (16, 17), which is designed for emitting an identification signal as a function of the magnetic polarity detected, and/or **characterized by** at least one magnetic sensor (16, 17), which is designed for emitting an identification signal as a function of the detected magnetic field strength, and/or **characterized by** at least one magnetic sensor (16, 17) which is designed for emitting an identification signal as a function of the field direction detected.

3. The device for charging batteries (1, 1') according to any one of the preceding claims, **characterized by**
multiple magnetic sensors (16, 17) of one or different types, wherein the magnetic sensors (16, 17) are arranged at different locations essentially in the area of the contact device (2, 2').

4. The device for charging batteries (1, 1') according to any one of the preceding claims, **characterized in that**
the at least one magnetic sensor (16, 17) and the charging circuit are arranged on a common carrier device (18), preferably on a common circuit board.

5. The device for charging batteries (1, 1') according to any one of the preceding claims, **characterized in that**
the contact device (2, 2') comprises a housing (19') with a housing wall (20), wherein the housing wall (20) has at least one area of a first wall thickness (21) and one area of a second smaller wall thickness (22) and wherein the at least one magnetic sensor (16, 17) is arranged essentially in the area of the second smaller wall thickness (22).

6. The device for charging batteries (1, 1') according to any one of the preceding claims, **characterized by**
a first connecting device (3, 3'), which is electrically connected to the contact device (2, 2'), and **characterized by** a second connecting device (5, 5'), which is electrically connected to the first connecting device (3) and is designed so that it can be electrically connected to a second device for charging batteries (1, 1'), so that the second device for charging batteries (1, 1') can be electrically connected to the electric power source (4) via the second connecting device (5, 5').

7. A battery for connection to a device for charging batteries (1, 1') according to any one of the preceding claims, with at least one repeatedly electrically rechargeable battery cell (96) and with electric contacts (97), which are connected to the at least one battery cell (96) and by means of which the battery can be connected to a device for charging batteries (1, 1'), **characterized by**
at least one shielding and/or amplifying device formed of a magnetically conductive material, by means of which a magnetic parameter of a magnetic element of the identification device (15) of the device for charging batteries (1, 1') is variable, in particular amplifiable, bundleable, attenuable or changeable in direction, so that the charging circuit of the device for charging batteries (1, 1') can determine the charging requirement of the battery, so that the battery can be charged according to this charging requirement.

8. The battery according to claim 7, **characterized in that**
the shielding and/or amplifying device comprises an element of soft iron.

9. The battery according to claim 7 or 8, **characterized in that**
the battery does not comprise a magnet element.

10. The battery according to one of the claims 7-9, **characterized in that**
the shielding and/or amplifying device is designed as a rod, a ledge or a plate, which is mounted In or on the battery.

## Revendications

1. Dispositif pour la charge d'accumulateurs (1, 1'), avec au moins un dispositif de contact électrique (2, 2') pour le branchement d'un accumulateur (100), dans lequel l'au moins un dispositif de contact (2, 2') est relié ou peut être relié à une source de courant (4) et dans lequel des accumulateurs (100) avec différents besoins de charge peuvent être reliés à l'au moins un dispositif de contact (2, 2'), avec un dispositif d'identification (15) pour la reconnaissance des différents accumulateurs (100) et avec un circuit de charge pour la charge des accumulateurs (100) en fonction de leurs différents besoins de charge, **caractérisé en ce que**
le dispositif d'identification (15) comprend au moins un élément magnétique et au moins un capteur magnétique (16, 17) pour la détection d'au moins un paramètre magnétique de l'au moins un élément magnétique, l'au moins un capteur magnétique (16, 17) étant relié au circuit de charge, pour la transmission d'un signal d'identification, l'au moins un élément magnétique et l'au moins un capteur magnétique (16, 17) étant conçus de telle manière, que l'au moins un paramètre magnétique de l'au moins un élément magnétique peut être modifié par un dispositif d'intensification et/ou de blindage relié à un accumulateur (100) connectable, et cette modification peut être détectée par l'au moins un capteur magnétique (16, 17), et dans lequel le circuit de charge est conçu pour la reconnaissance des différents accumulateurs (100) pouvant être branchés, sur la base du signal d'identification et pour la sélection des besoins de charge des différents accumulateurs (100), en fonction du signal d'identification.

2. Dispositif pour la charge d'accumulateurs (1, 1') selon la revendication 1, **caractérisé par**
au moins un capteur magnétique (16, 17), conçu pour l'émission d'un signal d'identification en présence d'un champ magnétique, et/ou **caractérisé par** au moins un capteur magnétique (16, 17) conçu pour l'émission d'un signal d'identification en fonction de la polarité magnétique détectée, et/ou **caractérisé par** au moins un capteur magnétique (16, 17) conçu pour l'émission d'un signal d'identification en fonction de la puissance magnétique détectée, et/ou **caractérisé par** au moins un capteur magnétique (16, 17) conçu pour l'émission d'un signal d'identification en fonction de la direction de champ détectée.

3. Dispositif pour la charge d'accumulateurs (1, 1') selon l'une des revendications précédentes, **caractérisé par**
plusieurs capteurs magnétiques (16, 17) d'un même type ou de différents types, les capteurs magnétiques (16, 17) étant installés à différents endroits, essentiellement dans la région du dispositif de contact (2, 2').

4. Dispositif pour la charge d'accumulateurs (1, 1') selon l'une des revendications précédentes, **caractérisé en ce que**
l'au moins un capteur magnétique (16, 17) et le circuit de charge sont installés sur un dispositif de support commun (18), de préférence sur une platine commune.

5. Dispositif pour la charge d'accumulateurs (1, 1') selon l'une des revendications précédentes, **caractérisé en ce que**
le dispositif de contact (2, 2') comprend un boîtier (19') avec une paroi de boîtier (20), la paroi de boîtier (20) comportant au moins une région d'une certaine première épaisseur (21) et une région d'une deuxième épaisseur (22) plus fine, et dans lequel l'au moins un capteur magnétique (16, 17) est installé essentiellement dans la région de la deuxième épaisseur de paroi (22) plus fine.

6. Dispositif pour la charge d'accumulateurs (1. 1') selon l'une des revendications précédentes, **caractérisé par**
un premier dispositif de raccordement (3, 3') électriquement relié au dispositif de contact (2, 2') et **caractérisé par** un deuxième dispositif de raccordement (5, 5') électriquement, relié au premier dispositif de raccordement (3, 3') et conçu de manière à pouvoir être électriquement relié à un deuxième dispositif pour la charge d'accumulateurs (1. 1'), si bien que le deuxième dispositif pour la charge d'accumulateurs (1, 1') peut être électriquement relié à la source de courant (4) par le biais du deuxième dispositif de raccordement (5, 5').

7. Accumulateur destiné au raccordement à un dispositif pour la charge d'accumulateurs (1, 1') selon l'une des revendications précédentes, avec au moins un élément d'accumulateur (96) apte à être électriquement rechargée plusieurs fois, et avec des contacts électriques (97) raccordés à l'au moins un élément d'accumulateur (96) et par le biais desquels l'accumulateur peut être branché à un dispositif pour la charge d'accumulateurs (1, 1'), **caractérisé par**
au moins un dispositif d'intensification et/ou de blindage constitué d'un matériau magnétiquement conducteur, permettant de modifier, en particulier d'intensifier, de rassembler, d'affaiblir ou de modifier dans sa direction un paramètre magnétique d'un élément magnétique du dispositif d'identification (15) du dispositif de charge d'accumulateurs (1, 1'), de telle manière que le besoin de charge de l'accumulateur peut être reconnue par le circuit de charge du dispositif de charge d'accumulateurs (1, 1') si bien que l'accumulateur est chargé en fonction de ce besoin de charge.

8. Accumulateur selon la revendication 7, **caractérisé en ce que**
le dispositif d'intensification et/ou de blindage comprend un élément constitué de fer doux.

9. Accumulateur selon la revendication 7 ou 8, **caractérisé en ce que**
l'accumulateur ne comporte pas d'élément magnétique.

10. Accumulateur selon l'une des revendications 7 à 9, **caractérisé en ce que**
le dispositif d'intensification et/ou de blindage est conçu comme un bâton, une baguette ou une plaque, qui est fixé(e) dans ou sur l'accumulateur.
